# EUROPEAN PATENT SPECIFICATION

(11) **EP 2 182 659 B1**
(45) Date of publication and mention of the grant of the patent: **17.04.2019**
(21) Application number: 08105701.0
(22) Date of filing: 30.10.2008
(51) Int. Cl.: H04B 10/272, H04B 10/2575, H04J 14/02

(54) **Method and optical system for the transmission of signals**
Verfahren und optisches System zur Signalübertragung
Procédé et système optique pour la transmission de signaux

(43) Date of publication of application: 05.05.2010
(73) Proprietor: ADTRAN GmbH, 10557 Berlin (DE)
(72) Inventor: Smolorz, Sylvia, 81379, München (DE); Treyer, Thomas, 81379, München (DE)
(74) Representative: Brachmann, Roland W.

(56) References cited:
- EP-A- 1 450 509
- EP-A2- 1 168 697
- WO-A-03/005612
- US-A1- 2002 181 044
- US-A1- 2003 235 236
- US-A1- 2005 025 488
- US-B1- 6 577 414

## Description

The invention relates generally to a method for the transmission of signals, especially of analog video signals via an optical network, for instance via a passive optical network. The method comprises:
- transmitting via a first transmission path a first signal in a first frequency range.

It is for instance possible to distribute the video signals via co-axial cable, i.e. separately from the optical network. If the signal comprises several video signals the band widths of the video signals may comprise several hundred mega hertz (MHz).

A passive optical network is an optical network that has no additional power supplies in intermediate nodes. One example of a network combining digital signals and analog video signals can be found in WO03/005612.

There is a need for a simple method to transmit signals, especially using only one infrastructure for digital and analog signals.

This need is accomplished by the subject matter of the independent claims. The sub claims refer to specific embodiments of the present invention.

The method may comprise:
- transmitting via a first transmission path a first signal in a first frequency range,
- transmitting via the first transmission path a second signal in a second frequency range,
- the first frequency range is different from the second frequency range, and
- the first signal is the same as the second signal.

This method allows the use of a passive optical network for the distribution of the signals. It is possible to transmit the first signal to a first part of the passive optical network and to transmit the second signal to a second part of the optical network. However, the first signal may not be transmitted to the second part of the network. Correspondingly, the second signal may not be transmitted to the first part of the optical network.

The first signal may be an analog video signal. This means, that the second signal is also an analog video signal. Analog signals may have a relative continuous range of signal values contrary to digital signals that may only have discrete signal values..

The method may also comprise:
- the first signal is separated from the second signal,
- the separated first signal is transmitted via a second transmission path,
- after the transmission via the second transmission path the first signal is filtered using a first device that has a first transfer function according to which signals in the first frequency range are transmitted, i.e. especially the first signal,
- wherein the first transfer function is such that the first device allows the transmission of signals in the second frequency range and blocks transmission of signals in at least one frequency range that is different from or is between the first frequency range and the second frequency range.

The first transmission path and/or the second transmission path may be optical fibers, for instance glass fibers or plastic fibers.

The used signals have typical wavelengths in the infrared range. However, colors in the visible range are used in the following to make the description easier to understand. The separation of the signals can be done using comparably simple optical devices, for instance a CWDM-splitter (Coarse Wavelength Division Multiplexing). Behind the splitter as seen from the core network there may be a first part of the passive optical network that transmits a first wavelength range, for instance comprising the wavelength of red light. A second part of the passive optical network may also be behind the splitter for the transmission of a second wavelength range, for instance comprising the wavelength of yellow light. By using different wavelength ranges it is possible to use the transmission capacity of the first transmission path to a higher value compared to the transmission of only one wavelength range.

The transfer function of the first device extends also in the second frequency range. This enables the usage of the first device in both network parts mentioned above. The customer or even the seller does not have to know in which part of the network the first device will be installed. This makes the purchase or the selling of the first network device very easy.

The method may alternatively or cumulatively comprise:
- a third signal is transmitted in a third frequency range and a fourth signal is transmitted in a fourth frequency range via the first transmission path,
- the third signal is different from the fourth signal,
- the third signal is separated together with the first signal from the second signal and the fourth signal,
- the first signal and the third signal are transmitted together via the second transmission path,
- the first transfer function is such that the third signal is blocked,
- the first transfer function is further more such that the first device blocks the transmission of signals in the fourth frequency range and allows transmission of signals in the second frequency range.

The third signal and the fourth signal may be digital signals, for instance, especially signals that are different from each other. The blocking of the third signal in the first device may be necessary to decrease the noise level at an optical/electrical conversion unit, for instance a photo diode that is used for receiving analog video signals.

Again, the transfer function of the first device has specific characteristics with regard to the wavelength that is used in the second part of the network. This allows the use of the first device in both parts of the optical network.

The method may comprise:
- the separated second signal is transmitted via a third transmission path, i.e. into the second part of the network,
- after the transmission via the third transmission path the second signal is filtered in a second device that has a second transfer function that transmits the second signal but preferably not the fourth signal,
- wherein the second transfer function is such that the second device allows the transmission of signals in the first frequency range and blocks the transmission of signals in at least one frequency range that is different from or between the first frequency range and the second frequency range.

The second device may have the same construction as the first device, especially with regard to the transfer functions. The transfer function of the second device is selected such that it is also possible to use the second device in the first part of the network, for instance instead of the first device. This makes the installation of the first device and of the second device very easy.

The second transfer function may be such that the second device blocks the transmission of the fourth signal. Furthermore the second transfer function may be such that the second device blocks the transmission of signals in the third frequency range and allows the transmission of signals in the first frequency range. Blocking of the third signal may be necessary to reduce noise level for optical electrical conversion of an analog video signal. Again, the second transfer function has properties with regard to signals that are transmitted in another part of the network. This allows the use of the second device also in this other part of the network.

The first transfer function may be the same as the second transfer function. Both transfer functions may be identical, for instance within production tolerances for the first device and for the second device.

The first transfer function may be a periodic transfer function. This means that the second transfer function may also be a periodic transfer function. Periodicity means here, that a part of the transfer function repeats after a predetermined period. In the simplest case there may be only two parts of the transfer function that are essentially identical. In other examples, there may be three or more than three parts that repeat periodically. There are optical devices that allow periodic transfer functions, for instance a Fabry-Perot-Interferometer.

The periodicity has two aspects. The first aspect relates to the localization of the same transfer function parts with regard to a frequency axis. The reference point for each part is for instance the frequency with the minimum attenuation. If there are for instance three parts of the transfer function, the frequency difference between the frequency of the first part and the frequency of the second part is the same as the difference between the frequency of the third part and the frequency of the second part. Production tolerance between two filters are also included in the word "same" for the first aspect.

The second aspect of periodicity relates to the shape of the parts of the transfer function. The word "same" includes here that there may be marginal differences, for instance, with regard to:
- side lobes that do not essentially influence the parts of a transfer function, and
- slightly different slopes of the parts of the transfer functions.

This means that the parts are considered to be the same as far as they have similar blocking and transmitting characteristics with regard to the sensitivity of the receiver that is used. Production tolerance between two filters are included in the word "same" for the second aspect.

The first transmission path may be part of a passive optical network. The second transmission path and the third transmission path may also be part of this passive optical network. Alternatively, other optical networks may be used, for instance active optical networks, i.e. networks that comprise components that are driven by additional power supplies.

There is also an optical system for the transmission of signals, comprising:
- a first transmission path that transmits a first signal in a first frequency range and a second signal in a second frequency range,
- the first frequency range is different from the second frequency range,
- the first signal is the same as the second signal.

Alternatively or cumulatively the optical system comprises:
- an analog video server that outputs the first signal and the second signal mentioned in the last paragraph.

Therefore the same technical effects that were mentioned above for the methods also apply to the optical system and/or to the analog video server.

The optical system may comprise:
- the first transmission path between a first device and a second device,
- a second transmission path between a first output port of the second device and a third device,
- the first device transmits a first signal in a first frequency range,
- the first device transmits a second signal in a second frequency range,
- the first device transmits a third signal in a third frequency range,
- the first device transmits a fourth signal in a fourth frequency range,
- the second device transmits the first signal in the first frequency range and the third signal in the third frequency range to the third device,
- the third device has a first transfer function that allows the transmission of the first signal and blocks the transmission of the third signal,
- the first transfer function is such that the third device allows also the transmission of signals in the second frequency range and blocks the transmission of signals in the fourth frequency range.

The first device may be coupled to an analog video server and to an optical line termination device. The first frequency range to the fourth frequency range may be different from one another. These optical systems may be used to perform the method mentioned above. Again it is possible to use the third device in different parts of the optical networks, especially in parts that transmit different wavelengths, i.e. different colors.

The third device may comprise an optical filter and/or a de-multiplexer that has a first transfer function. The filter may comprise a Fabry-Perot Interferometer. The filter may comprise a glass plate with a given thickness. The glass plate may be covered on both sides with a layer or special layers of transparent dielectrics, such that the interference of reflections from the interfaces between air and the outer layer, between the glass and a layer in direct contact with the glass or between layers produces cancellation of the transmitted light and/or reflected light such that a periodic filter is produced.

The optical system may comprise a third transmission path between a second output port of the second device and a fourth device. The second device may furthermore transmit the second signal in the second frequency range and the fourth signal in the fourth frequency range to the fourth device. The fourth device may have a second transfer function that allows the transmission of the second signal and blocks the transmission of the fourth signal. Furthermore, the second transfer function may be such that the fourth device allows the transmission of signals in the first frequency range and blocks the transmission of signals in the third frequency range.

Again, it is possible to use the fourth device in more than one part of the network, especially in parts that transmit different wavelengths.

The first transfer function may be the same as the second transfer function. Both transfer functions may be identical to one another within the production tolerances of optical filters or optical devices.

The second signal and the fourth signal may not be transmitted from the second device to the third device. This means that the third signal and the fourth signal are only transmitted in a second part of the network but not in a first part of the network.

Correspondingly, the second signal and the fourth signal may not be transmitted via the second transmission path, i.e. from the second device to the first device.

The optical system may comprise devices or features that allow the optical system to perform a method mentioned above. Again the same technical effects as mentioned above also apply to the optical system.

For a more complete understanding of the present invention and the advantages thereof, reference is now made to the following descriptions taken in conjunction with the accompanying drawings in which:
- Figure 1: illustrates a network with a CWDM splitter,
- Figure 2: illustrates the parts of a user terminal,
- Figure 3: illustrates the function of a periodic demultiplexer,
- Figure 4: illustrates an alternative embodiment of a user terminal, and
- Figure 5: illustrates a network with a passive broadband splitter.

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention. Moreover, the same reference signs refer to the same technical features if not stated otherwise. As far as "may" is used in this application it means the possibility of doing so as well as the actual technical implementation.

The present invention will be described with regard to preferred embodiment in a specific context, namely a passive optical network PON. The invention may also be applied to other optical networks, for instance to active optical networks.

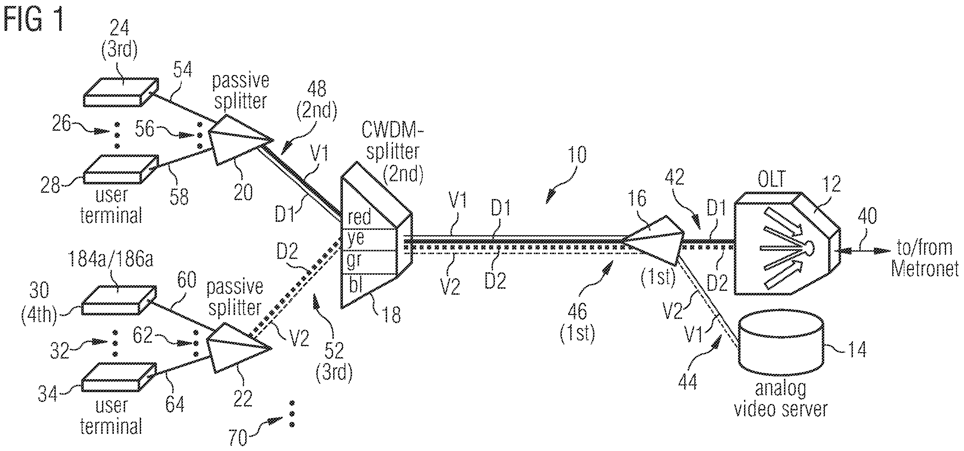

Figure 1 illustrates a passive optical network 10 that comprises:
- an optical line termination device 12, for instance a device of the type hiX 57xxmanufactured by Nokia Siemens Networks GmbH & Co. KG, for instance HiX5750,
- an analog video server device 14,
- a passive multiplexer device 16 (first device in the claims),
- a CWDM-splitter device 18 (second device in the claims),
- passive splitter devices 20, 21,
- terminal devices 24 (first device or third device in the claims), 26, 28, 30 (second device or fourth device in the claims), 32 and 34.

The optical line termination device 12 terminates the passive optical network 10 and is the interface to a further data transmission network 40, for instance to a metro net or to the internet. The network 40 may for instance comprise or be one of the following networks:
- IP (Internet Protocol) over WDM (Wavelength Division Multiplexing),
- an Ethernet over WDM,
- an IP over Ethernet, or
- MPLS (Multi Protocol Label Switching) over WDM.

The analog video server 14 stores for instance a lot of analog videos that may be selected by users of the passive optical network 10. Alternatively the video server 14 may be connected to TV stations via satellite or via other connections. In Figure 1 it is presumed, that only two analog video signals V1 and V2 are transmitted from video server 14. More than two video signals are used in other embodiments. Each video signal V1 and V2 may comprise only one television channel or more than one television channels/videos. The video signals V1 and V2 are transmitted from video server 14 to multiplexer 16 via a connection 44, for instance an optical fiber.

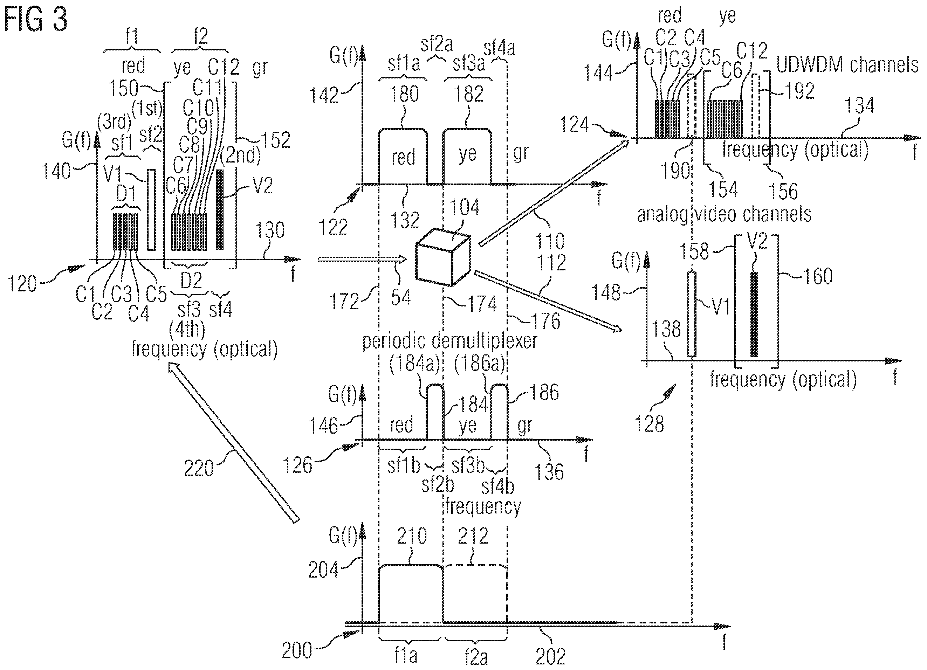

Another input of multiplexer 16 is connected to an output of optical line termination device 12 via a connection 42, for instance also an optical fiber. Multiplexer 16 multiplexes video signals V1 and V2 together with digital data signals D1 and D2 to the same output port. The frequency ranges of video signals V1 and V2 and of digital signals D1 and D2 are explained in more detail with regard to Figure 3 below. Digital data D1 and D2 are for instance telephone data, internet data, program data or other data.

A further connection 46 is between multiplexer device 16 and CWDM-splitter device 18. Connection 46 transmits video signals V1, V2 and digital signals D1 and D2. Connection 46 is for instance an optical fiber, for instance a single mode fiber. Connection 46 is named as a first connection in the claims.

Splitter device 18 is able to split the frequency range that is received via connection 46. In the example splitter device 18 has four outputs for the frequency ranges that comprise the red, yellow, green and blue range light respectively. Colors in visible light ranges are again only used to make the description more understandable. In praxis wavelengths in the infrared range are used. In the following only data transmission with regard to the red range and to the yellow range are explained to make the description as simple as possible. In other embodiments there are other devices that are connected to the output for the green range and for the blue range, see devices that are illustrated by dots 70. In the example, splitter device 18 sends digital data D1 and video signal V1, i.e. signals in the red frequency range, to the passive splitter device 20 via a connection 48. Connection 48 is named as second connections in the claims.

Furthermore, splitter device 18 sends digital data D2 and video signal V2, i.e. signals in the yellow frequency range to the passive splitter device 22 via a connection 52 (third connection in the claims). Connections 48 and 52 may be optical fibers, for instance with the same physical structure. Connection 48 is used for the transmission of light in the red frequency range and connection 52 is used for the transmission of light in the yellow frequency range.

Passive splitter device 20 distributes incoming light equally to all outputs. Passive splitter device 20 is connected to a user terminal 24. User terminal 24 is for instance an optical network unit (ONU). There is a connection 54 between passive splitter device 20 and user terminal 24. Connection 54 is for instance an optical fiber.

Further user terminals 26, 28 are connected to passive splitter device 20, see connections 56 illustrated by dots and connection 58. Connections 56 and 58 may be optical fibers.

A further user terminal 30 is connected to passive splitter device 22 via a connection 60. User terminal 30 has the same components as user terminal 24, i.e. both user terminals 24 and 30 may be interchanged. Transfer functions of user terminal 24 and user terminal 30 are described in more detail with regard to Figure 3 below. Further user terminals 32, 34 are connected to passive splitter device 22 via connections 62 and 64. Connections 60, 62 and 64 may be optical fibers.

Splitter device 18 is a coarse splitter because a sub range that is the result of the splitting is greater than 20 nanometer or greater than 30 nanometer, for instance the above mentioned red frequency range or the above mentioned yellow frequency range.

In another embodiment the video server 14 is also part of the optical line termination device 12. Alternatively, the video signals V1, V2 may be transmitted via connection line 40 to optical line termination device 12.

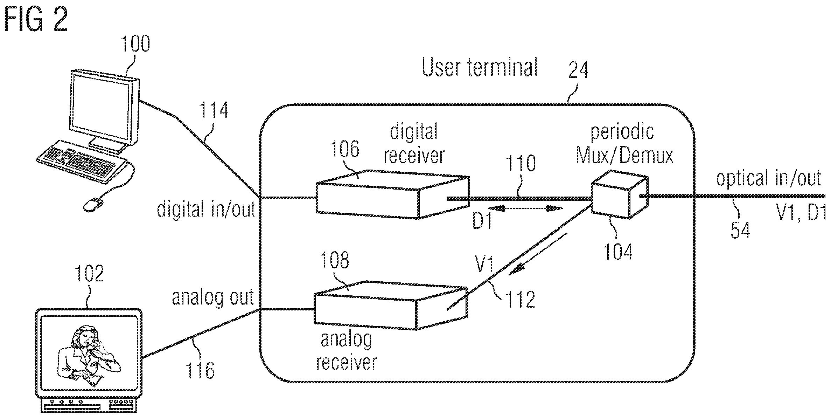

Figure 2 illustrates the parts of user terminal 24. As mentioned above, the user terminal 24 is connected to optical connection 54. User terminal 24 comprises:
- a periodic multiplexer/de-multiplexer 104,
- a digital receiver 106, and
- an analog receiver 108.

Periodic multiplexer/de-multiplexer 104 is connected at one side to connection 54. At the other side periodic multiplexer/de-multiplexer 104 is connected via an optical connection 110 to digital receiver 106 and via an optical connection 112 to analog receiver 108.

A computer 100 is connected to digital receiver 106 via line 114, for instance via an Ethernet line. A television set 102 is connected to analog receiver 108 via a co-axial cable 116. This means that there is no set top box between connection 54 and television set 102.

The function of multiplexer/de-multiplexer 104 in downstream direction is described in more detail with regard to Figure 3 below. Multiplexer/de-multiplexer 104 de-multiplexes digital data D1 to digital receiver 106 and video signal V1 to analog receiver 108. In the embodiment it is possible for the user of user terminal 24 to send data via connection 54 by using computer 100.

Digital receiver 106 converts optical digital data D1 to Ethernet data. Analog receiver 108 converts optical video signal V1 to an electrical analog television signal. Therefore the user of user terminal 24 can use his old television set 102 by plugging in co-axial cable 116.

Figure 3 illustrates the functions of periodic multiplexer 104. Figure 3 illustrates in an upper part 5 coordinate systems 120 to 128. Each coordinate system 120 to 128 has an x-axis 130 to 138 and an y-axis 140 to 148. For instance, coordinate system 120 has x-axis 130 and y-axis 140. X-axis 130 to 138 have the same scaling and show frequency values f. Y-axis 140 to 148 refers to values of the transfer function G(f) or H(f). Although reference is made to the transfer function G(f) other functions may be used to describe the system equivalently.

Coordinate system 120 shows the signals that are transmitted via connections 48, 54. These signals are transmitted in a frequency range f1, for instance the red light frequency range. Frequency range f1 is divided into sub frequency ranges sf1 and sf2 (first frequency range in the claims). Sub frequency range sf1 (third frequency range in the claims) comprises the digital signals D1, for instance component signals C1, C2, C3, C4 and C5. The modulation of the digital data D1 may be for instance on/off keying, phase modulation, especially QPSK, or quadrature amplitude modulation.

Sub frequency range sf2 comprises video signal V1. Video signal V1 is an analog signal, for instance a signal that uses vestigial sideband modulation.

For comparison, Figure 3 also shows a frequency range f2, see brackets 150 and 152. No signals are transmitted in frequency range f2 via connections 48, 54. However, connection 46 transmits signals in both frequency ranges f1 and f2. Frequency range f2 is divided in a sub frequency range sf3 (fourth frequency range in the claims) and a sub frequency range sf4 (second frequency range in the claims). Sub frequency range sf3 includes the frequency range for the transmission of digital data D2, i.e. component data C6 to C12. Sub frequency range sf4 includes video signal V2. Sub frequency ranges sf1, sf2, sf3 and sf4 are arranged in this order with increasing frequencies. In the embodiment, there are only small gaps between sub frequency ranges sf1, sf2, sf3 and sf4 to enable filtering as described in the following.

Coordinate system 122 shows the transfer function G(f) of that part of de-multiplexer 104 that transmits data to the digital receiver 106. As shown in coordinate system 122, a first part 180 of the transfer function enables data transmission within a sub frequency range sf1a that corresponds to sub frequency range sf1. "Corresponds" means here, that sub frequency range sf1a is equal to sub frequency range sf1 or slightly wider. However, as shown in coordinate system 122 no signals of a sub frequency range sf2a are transmitted from multiplexer 104 to digital receiver 106. Sub frequency range sf2a corresponds to sub frequency range sf2. Although no signals in frequency range sf2 are transmitted to de-multiplexer 104, there is a second part 182 of the transfer function. Second part 182 would enable a transmission of signals in a sub frequency range sf3a corresponding to sub frequency range sf3. Furthermore, there is a sub frequency range sf4a that would not allow the transmission of signals in the frequency range of video signal V2 to digital receiver 106.

Coordinate system 124 shows the signals at the input of digital receiver 106, i.e. the digital components C1 to C5 are transmitted to digital receiver 106. In the first embodiment, video signal V1 is not transmitted to digital receiver 106. Further signals are only shown in brackets 154 and 156. Signals that are shown within brackets 154 and 156 are only valid for user terminal 30 as explained in more detail below.

Coordinate system 126 shows the transfer function of the de-multiplexer 104 with regard to data that is transmitted to analog receiver 108. This transfer function comprises a first part 184 in a sub frequency range sf2b which corresponds to sub frequency range sf2. As shown by function 184 de-multiplexer 104 transmits video signal V1 to analog receiver 108. However de-multiplexer 104 suppresses the transmission of digital data in a sub frequency range sf1b that corresponds to sub frequency range sf1.

Although not needed for user terminal 24 there is a second part 186 of the transfer function of de-multiplexer 104. Second part 186 is located within a sub frequency range sf4b that corresponds to sub frequency range sf4. According to part 186 de-multiplexer 104 would also transmit video data V2 to analog receiver 108. Furthermore de-multiplexer 104 would suppress digital data D2 because the transfer function has a comparably high attenuation in a sub frequency range sf3b that corresponds to sub frequency range sf3.

As shown in coordinate system 128 only video signal V1 is transmitted from de-multiplexer 104 to analog receiver 108. Video signal V2 is shown in brackets 158 and 160 because this video signal V2 is only relevant for user terminal 30. Video signal V2 is not transmitted to user terminal 24. Figure 3 shows in the lower part a coordinate system 200.

Coordinate system 200 describes the transfer function of CWDM-splitter device 18. As shown, there is a first transfer function 210 for the red range part of splitter device 18. According to transfer function 210 signals within frequency range f1a that corresponds to frequency range f1 are transmitted by the part of splitter device 18 that transmits the red frequency range. However, signals outside frequency range f1, f1a are suppressed by the part of splitter device 18 that transmits signal in the red frequency range.

The part of splitter device 18 that transmits the yellow frequency range has a transfer function that is shown by transfer function 212 (broken line). As indicated by transfer function 212 the part of splitter device 18 that transmits the yellow frequency range transmits signals within a frequency range f2a that corresponds to frequency range f2. However, signals outside this frequency range f2a are suppressed by the part of splitter device 18 that transmits the yellow range.

Lines 172, 174 and 176 show the relation between three frequencies of coordinate systems 122, 126 and 200. Therefore, it can be seen, that parts 180 and 184 overlap with part 210. Parts 182 and 186 overlap with part 212. In consequence, de-multiplexer 104 can be used in user terminal 24 or in user terminal 30.

If de-multiplexer 104 is used in user terminal 30 there is a transfer function with parts 184a and 186a that correspond to transfer function parts 184 and 186. For user terminal 30 signals D2 and V2 of coordinate system 120 are valid but not signals D1, V1. According to coordinate system 122 digital signals D2 are transmitted to digital receiver of user terminal 30, see components C6 to C12 in brackets 154 to 156. Video signal V2 is not transmitted to digital receiver of user terminal 30 in the first embodiment.

According to coordinate system 126, part 186, only video signal V2 is transmitted from the de-multiplexer of user terminal 30 to the analog receiver of user terminal 30, see video signal V2 in brackets 158 and 160.

In other embodiments there are more than two frequency ranges f1, f2, for instance also a frequency range for green and/or for blue light.

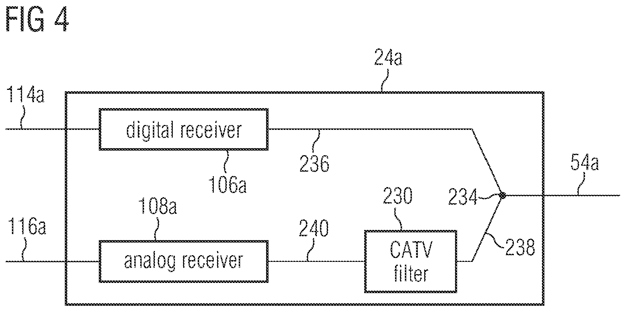

Figure 4 shows an alternative embodiment of user terminal 24. Therefore, corresponding parts are referenced by the same reference sign but with an appended small letter "a". User terminal 24a comprises:
- digital receiver 106a that corresponds to digital receiver 106,
- an analog receiver 108a that corresponds to analog receiver 108, and
- CATV filter (CAble TeleVision) 230.

An output of digital receiver 106a is connected to an Ethernet cable 114a that corresponds to Ethernet cable 114. An output of analog receiver 108a is connected to a coaxial cable 116a that corresponds to coaxial cable 116.

Connection 54a has one end at a distribution/accumulation point 234. There is an optical line between point 234 and an input of digital receiver 106a. Furthermore, there is an optical line between point 234 and an input of filter 230. As shown in Figure 4, there is a direct connection between connection 54a and digital receiver 106a. Therefore all signals D1 and V1 are transmitted to the input terminal of digital receiver 106a, see Figure 3, coordinate system 124, video signal 190. The same can be done for user terminal 30, see Figure 3, coordinate system 124, video signal 192.

This means that the transfer function of user terminal 24a with regard to digital receiver 106a has for instance the value "one" or a comparably small attenuation for all mentioned frequencies.

It is not necessary to use a multiplexer/de-multiplexer in user terminal 24a. Filter 230 has a transfer function as shown in Figure 3, coordinate system 126. Therefore, the signals that are transmitted via connection 240 correspond to the signal shown in coordinate system 128.

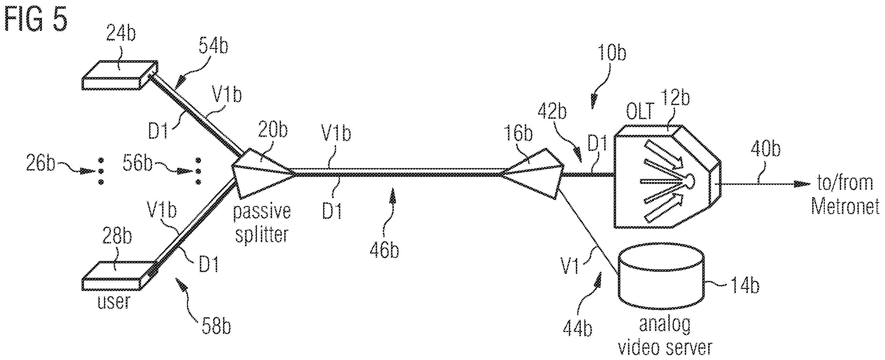

Figure 5 illustrates a network 10b with a passive broadband splitter device 20b that corresponds to passive splitter device 20. Network 10b corresponds to network 10 but has the differences explained in more detail below. Network 10b comprises also:
- an optical line termination device 12b that corresponds to optical line termination device 12,
- an analog video server 14b that corresponds to analog video server 14 except that it outputs only video signal V1 but not video signal V2,
- multiplexer device 16b corresponds to multiplexer device 16, and
- user terminals 24b to 28b that corresponds to user terminals 24 to 28, i.e. user terminals 24b to 28b comprise periodic multiplexer/de-multiplexers 104 with the transfer functions shown in Figure 3.

Optical line termination 12b is connected to connection line 40b that corresponds to connection line 40. There are the following connections in network 10b:
- a connection 42b between optical line termination device 12b and multiplexer device 16b,
- a connection 44b between analog video server 14b and multiplexer device 16b,
- a connection 46b between multiplexer device 16b and passive splitter device 250, and
- connections 54b, 56b and 58b that correspond to connections 54, 56 and 58, respectively.

Digital data D1 are transmitted from optical line termination 12b via multiplexer device 16b, connection 46b, via passive splitter device 20b to the user terminals 24b to 28b. Video signal V1 is transmitted from analog video server 14b, via multiplexer device 16b connection 46b, passive splitter 20b to user devices 20b to 28b.

Network 10b may represent a first stage in the development of a network. It is possible to insert the CWDM-splitter device 18 between passive splitter 20b and multiplexer 16b at a later time. It is not necessary to change user devices 24b to 28b in this case, because they already have transfer functions that allow their usage in a network like network 10.

Connections 42b, 44b, 46b, 54b to 58b may be optical fibers, especially single mode optical fibers.

A typical attenuation that suppresses the transmission of signals may be greater than 30 dB (decibel). For the separation of an analog video channel from a digital video channel, the attenuation difference between the transmitted signals and the blocked signals should be at least 25 dB, for example 3 dB attenuation for the transmitted signal and at least 28 dB attenuation for the blocked signals.

In other words, a passive optical network with periodic analog video has been described. Optical access networks are foreseen to be the future data access technology. The ultra-dense wavelength division multiplex (UDWDM) network is a promising candidate, offering a number of convincing advantages. "Ultra dense" means here a frequency range smaller than 2 pm (pico meter) for each digital component. In the UDWDM system the insertion loss due to very high splitting ratio can be reduced by CWDM-filters, thereby splitting the PON into sub-PONs with distinct wavelengths bands. CWDM-filters are filters that transfer only a sub range of frequency to a specific output compared with the frequency range at the input of the filter. The optical system provides a logical point-to-point connection to each subscriber, but no broadcast functionality. Operators who provide analog video over fiber today may not accept an UDWDM system if it is not compatible with analog video systems.

The current solution used in the market place is one fiber, used bi-directionally, for data communications, and another fiber, used uni-directionally for CATV. This results in two completely separate PONs, which can only share infrastructure such as cable ducts and cabinets, but not splitters, amplifiers and other network elements.

Therefore, it is proposed to add at least one analog video channel per CWDM-band to the UDWDM system that uses CDWDM-filters. These analog video channels contain all the same content. The principle has been explained in Figures 1 to 4. Figure 5 shows the option without a CDWDM splitter in a first stage of network development.

At the ONU (Optical Network Unit), i.e. at the user terminal, a filter separates the video channel from the digital channels. The video channel is guided to a direct-detection receiver, i.e. the receiver design can be a commercially available analog video receiver diode and amplifier. The analog video receiver makes the video channel available to the end user over a standard TV-out connector, i.e. a co-axial cable for instance. The digital signals are detected by the digital UDWDM receiver. It is possible to use a frequency selective receiver, for instance a coherent receiver using the heterodyne principle.

In order to simplify selling and maintenance logistics, the filter used for the separation of the analog and digital channels is periodic. This means that the spectral shape repeats in each CWDM-band, as explained in detail with regard to Figure 3 above.

The explained design allows a provider with a video-over- fiber business also to offer broadband digital services to their customers, while maintaining the old customer base. An alternative would be to use UDWDM channels to deliver HDTV (High Density Television), but this would require that the user purchases a new television set. With the proposed design the legacy customer base for video is not affected by the introduction of UDWDM or other optical transmission methods. The users simply plug their TV-cable into the new user terminals or ONUs instead to their old set-top boxes.

Another option would be to transmit the TV channels over UDWDM and perform a digital to analog conversion in the ONU. However, due the very high requirements on signal quality and linearity this would require a much larger optical bandwidth for the digital channels.

The periodic de-multiplexer should be adapted to the providers wavelength plan. Ample guard bands between the UDWDM-bands and the video-bands accommodate the manufacturing tolerances of the dielectric filters. The periodic de-multiplexer can be implemented most cost-efficiently as a dielectric filter, for example a glass plate coated with layers of dielectric of varying or different index of refraction, so that transmission is maximized for some wavelengths and minimized for other wavelengths. Other possibilities include the use of diffraction gratings. Here the angle of diffraction from the grating depends on the wavelength of light, so that different wavelengths are separated spatially and can be selected by mirrors in the appropriate position. The same principle of de-multiplexing also works if a prism is used instead of a diffraction grating.

Although embodiments of the present invention and their advantages have been described in detail, it should be understood that various changes, substitutions and alterations can be made therein without departing from the scope of the invention as defined by the appended claims. For example, it will be readily understood by those skilled in the art that many of the features, functions, processes and methods described herein may be varied while remaining within the scope of the present invention. Moreover, the scope of the present application is not intended to be limited to the particular embodiments of the system, process, manufacture, method or steps described in the present invention. As one of ordinary skills in the art will readily appreciate from the disclosure of the invention systems, processes, manufacture, methods or steps presently existing or to be developed later that perform substantially the same function or achieve substantially the same result as the corresponding embodiments described herein may be utilized according to the present invention. Accordingly, the appended claims are intended to include within their scope such systems, processes, methods or steps.

### List of reference signs

10 passive optical network
12 optical line termination device
14 server
16 multiplexer device
18 splitter device
20, 22 passive splitter device
24 to 34 user terminal
40 to 64 connection line
V1, V2 video signal
D1, D2 digital signal
70 further network part
100 computer
102 television set
104 multiplexer/de-multiplexer
106 digital receiver
108 analog receiver
110, 112 optical line
114 line
116 co-axial cable
120 to 128 coordinate system
130 to 138 x-axis
140 to 148 y-axis
f1, f2 frequency range
sf1 to sf4 sub frequency range
c1 to c12 signal component
150 to 160 bracket
172 to 178 broken line for same frequency
180 to 186 transfer function
190, 192 video signals
200 coordinate system
202 x-axis
204 y-axis
210, 212 transmission function
220 arrow
230 CATV filter
232 amplifier
234 to 240 optical connection

## Claims

1. Method for the transmission of signals in an optical network, comprising:
transmitting via a first transmission path (46) a first signal (V1) in a first frequency range (sf2) and a second signal (V2) in a second frequency range (sf4),
the first frequency range (sf2) is different from the second frequency range (sf4),
the first signal (V1) containing the same content as the second signal (V2), separating (18) the first signal (V1) from the second signal (V2),
transmitting the separated first signal (V1) via a second transmission path (48),
after the transmission via the second transmission path (48) the first signal (V1) is filtered using a first device (104) that has a first transfer function (184, 186) that transmits the first signal (V1),
wherein the first transfer function (184, 186) is such that the first device (104) allows transmission of signals in the second frequency range (sf4b) and blocks transmission of signals in at least one frequency range (sf3b) that is different from or is between the first frequency range (sf2b) and the second frequency range (sf4b).

2. Method according to claim 1, wherein the first signal (V1) is an analog video signal.

3. Method according to one of the preceding claims,
wherein a third signal (D1) is transmitted in a third frequency range (sf1) and a fourth signal (D2) is transmitted in a fourth frequency range (sf3) via the first transmission path (46),
wherein the third signal (D1) is different from the fourth signal (D2),
wherein the third signal (D1) is separated (18) together with the first signal (V1) from the second signal (V2) and the fourth signal (D2),
the first signal (V1) and the third signal (D1) are transmitted together via the second transmission path (48), the first transfer function (184, 186) is such that the third signal (D1) is blocked,
wherein the first transfer function (184, 186) is such that the first device (104) blocks the transmission of signals in the fourth frequency range (sf3b) and allows transmission of signals in the second frequency range (sf4b).

4. Method according to claim 3, wherein the separated second signal (V2) is transmitted by a third transmission path (52), after the transmission via the third transmission path (52) the second signal (V2) is filtered in a second device (30) that has a second transfer function (184a, 186a) that transmits the second signal (V2),
wherein the second transfer function (184a, 186a) is such that the second device (30) allows the transmission of signals in the first frequency range (sf2) and blocks the transmission of signals in at least one frequency range (sf3) that is different from or between the first frequency range (sf2) and the second frequency range (sf4).

5. Method according to claim 4,
wherein the second transfer function (184a, 186a) is such that the second device (30) blocks the transmission of the fourth signal (D2), and
wherein the second transfer function (184a, 186a) is such that the second device (30) blocks the transmission of signals in the third frequency range (sf1) and allows the transmission of signals in the first frequency range (sf2).

6. Method according to claim 4 or 5, wherein the first transfer function (184, 186) is the same as the second transfer function (184a, 186a).

7. Method according to one of the preceding claims,
wherein the first transfer function (184, 186) is a periodic transfer function.

8. Method according to one of the preceding claims, wherein the first transmission path (46) is part of a passive optical network (10).

9. Optical system (10) for the transmission of optical signals, comprising:
a first transmission path (46), adapted to transmit a first signal (V1) in a first frequency range (sf2) and a second signal (V2) in a second frequency range (sf4),
the first frequency range (sf2) being different from the second frequency range (sf4),
the first signal (V1) being the same as the second signal (V2),
the optical system also comprising:
an analog video server (14) adapted to output the first signal (V1) and the second signal (V2)
the first transmission path (46) between a first device (16) and a second device (18),
a second transmission path (48, 54) between a first output port of the second device (18) and a third device (24),
the first device (16) being adapted to transmit a first signal (V1) in a first frequency range (sf2), a second signal (V2) in a second frequency range (sf4), a third signal (D1) in a third frequency range (sf1) and a fourth signal (D2) in a fourth frequency range (sf3),
the second device (18) being adapted to transmit the first signal (V1) in the first frequency range (sf2) and the third signal (D1) in the third frequency range (sf1) to the third device (24),
the third device (24) having a first transfer function (184, 186) allowing the transmission of the first signal (V1) and blocking the transmission of the third signal (D1),
the first transfer function (184, 186) being such that the third device (24) allows the transmission of signals in the second frequency range (sf4) and blocks the transmission of signals in the fourth frequency range (sf3).

10. Optical system (10) according to claim 9, wherein the third device (24) comprises an optical filter and/or a de-multiplexer that has the first transfer function (184, 186).

11. Optical system (10) according to claim 10, wherein the filter comprises a Fabry-Perot interferometer.

12. Optical system (10) according one of the claims 9 to 11, comprising:
a third transmission path (52) between a second output port of the second device (18) and a fourth device (30),
the second device (18) transmitting a second signal (V2) in the second frequency range (sf4) and the fourth signal (D2) in the fourth frequency range (sf3) to the fourth device (30),
the fourth device (30) having a second transfer function (184a, 186a) allowing the transmission of the second signal (V2) and blocking the transmission of the fourth signal (D2), and the second transfer function (184a, 186a) being such that the fourth device (30) allows the transmission of signals in the first frequency range (sf2) and blocks the transmission of signals in the third frequency range (sf1).

13. Optical system (10) according to claim 12, wherein the first transfer function (184, 186) is the same as the second transfer function (184a, 186a).

14. Optical system (10) according to one of the claims 9 to 13, being unsuitable to transmit the second signal (V2) and the fourth signal (D2) from the second device (28) to the third device (24).

15. Optical system (10) according to one of the claims 9 to 14, comprising devices to perform a method according to one of the claims 1 to 8.

## Patentansprüche

1. Verfahren zur Signalübertragung in einem optischen Netz, das Folgendes umfasst:
Übertragen eines ersten Signals (V1) in einem ersten Frequenzbereich (sf2) und eines zweiten Signals (V2) in einem zweiten Frequenzbereich (sf4) über einen ersten Übertragungsweg (46),
wobei der erste Frequenzbereich (sf2) vom zweiten Frequenzbereich (sf4) verschieden ist,
wobei das erste Signal (V1) denselben Inhalt wie das zweite Signal (V2) hat,
Trennen (18) des ersten Signals (V1) vom zweiten Signal (V2),
Übertragen des getrennten ersten Signals (V1) über einen zweiten Übertragungsweg (48),
wobei das erste Signal (V1) nach der Übertragung über den zweiten Übertragungsweg (48) unter Verwendung einer ersten Vorrichtung (104) gefiltert wird, die eine erste Übertragungsfunktion (184, 186) aufweist, die das erste Signal (V1) überträgt,
wobei die erste Übertragungsfunktion (184, 186) derart ist, dass die erste Vorrichtung (104) die Übertragung von Signalen im zweiten Frequenzbereich (sf4b) zulässt und die Übertragung von Signalen in mindestens einem Frequenzbereich (sf3b) sperrt, der vom ersten Frequenzbereich (sf2b) und vom zweiten Frequenzbereich (sf4b) verschieden ist oder dazwischen liegt.

2. Verfahren nach Anspruch 1, wobei das erste Signal (V1) ein analoges Videosignal ist.

3. Verfahren nach einem der vorhergehenden Ansprüche,
wobei über den ersten Übertragungsweg (46) ein drittes Signal (D1) in einem dritten Frequenzbereich (sf1) übertragen wird und ein viertes Signal (D2) in einem vierten Frequenzbereich (sf3) übertragen wird,
wobei das dritte Signal (D1) vom vierten Signal (D2) verschieden ist,
wobei das dritte Signal (D1) zusammen mit dem ersten Signal (V1) vom zweiten Signal (V2) und vom vierten Signal (D2) getrennt (18) wird,
das erste Signal (V1) und das dritte Signal (D1) zusammen über den zweiten Übertragungsweg (48) übertragen werden,
die erste Übertragungsfunktion (184, 186) derart ist, dass das dritte Signal (D1) gesperrt wird,
wobei die erste Übertragungsfunktion (184, 186) derart ist, dass die erste Vorrichtung (104) die Übertragung von Signalen im vierten Frequenzbereich (sf3b) sperrt und die Übertragung von Signalen im zweiten Frequenzbereich (sf4b) zulässt.

4. Verfahren nach Anspruch 3, wobei das getrennte zweite Signal (V2) durch einen dritten Übertragungsweg (52) übertragen wird, das zweite Signal (V2) nach der Übertragung über den dritten Übertragungsweg (52) in einer zweiten Vorrichtung (30) gefiltert wird, die eine zweite Übertragungsfunktion (184a, 186a) aufweist, die das zweite Signal (V2) überträgt,
wobei die zweite Übertragungsfunktion (184a, 186a) derart ist, dass die zweite Vorrichtung (30) die Übertragung von Signalen im ersten Frequenzbereich (sf2) zulässt und die Übertragung von Signalen in mindestens einem Frequenzbereich (sf3) sperrt, der vom ersten Frequenzbereich (sf2) und vom zweiten Frequenzbereich (sf4) verschieden ist oder dazwischen liegt.

5. Verfahren nach Anspruch 4,
wobei die zweite Übertragungsfunktion (184a, 186a) derart ist, dass die zweite Vorrichtung (30) die Übertragung des vierten Signals (D2) sperrt, und
wobei die zweite Übertragungsfunktion (184a, 186a) derart ist, dass die zweite Vorrichtung (30) die Übertragung von Signalen im dritten Frequenzbereich (sf1) sperrt und die Übertragung von Signalen im ersten Frequenzbereich (sf2) zulässt.

6. Verfahren nach Anspruch 4 oder 5, wobei die erste Übertragungsfunktion (184, 186) dieselbe wie die zweite Übertragungsfunktion (184a, 186a) ist.

7. Verfahren nach einem der vorhergehenden Ansprüche,
wobei die erste Übertragungsfunktion (184, 186) eine periodische Übertragungsfunktion ist.

8. Verfahren nach einem der vorhergehenden Ansprüche, wobei der erste Übertragungsweg (46) Teil eines passiven optischen Netzes (10) ist.

9. Optisches System (10) zur Übertragung von optischen Signalen, das Folgendes umfasst:
einen ersten Übertragungsweg (46), der ausgelegt ist, ein erstes Signal (V1) in einem ersten Frequenzbereich (sf2) und ein zweites Signal (V2) in einem zweiten Frequenzbereich (sf4) zu übertragen,
wobei der erste Frequenzbereich (sf2) vom zweiten Frequenzbereich (sf4) verschieden ist,
wobei das erste Signal (V1) dasselbe wie das zweite Signal (V2) ist,
wobei das optische System außerdem Folgendes umfasst:
einen analogen Videoserver (14), der ausgelegt ist, das erste Signal (V1) und das zweite Signal (V2) auszugeben,
den ersten Übertragungsweg (46) zwischen einer ersten Vorrichtung (16) und einer zweiten Vorrichtung (18),
einen zweiten Übertragungsweg (48, 54) zwischen einem ersten Ausgangsanschluss der zweiten Vorrichtung (18) und einer dritten Vorrichtung (24),
wobei die erste Vorrichtung (16) ausgelegt ist, ein erstes Signal (V1) in einem ersten Frequenzbereich (sf2), ein zweites Signal (V2) in einem zweiten Frequenzbereich (sf4), ein drittes Signal (D1) in einem dritten Frequenzbereich (sf1) und ein viertes Signal (D2) in einem vierten Frequenzbereich (sf3) zu übertragen,
wobei die zweite Vorrichtung (18) ausgelegt ist, das erste Signal (V1) im ersten Frequenzbereich (sf2) und das dritte Signal (D1) im dritten Frequenzbereich (sf1) an die dritte Vorrichtung (24) zu übertragen,
wobei die dritte Vorrichtung (24) eine erste Übertragungsfunktion (184, 186) aufweist, die die Übertragung des ersten Signals (V1) zulässt und die Übertragung des dritten Signals (D1) sperrt,
wobei die erste Übertragungsfunktion (184, 186) derart ist, dass die dritte Vorrichtung (24) die Übertragung von Signalen im zweiten Frequenzbereich (sf4) zulässt und die Übertragung von Signalen im vierten Frequenzbereich (sf3) sperrt.

10. Optisches System (10) nach Anspruch 9, wobei die dritte Vorrichtung (24) einen optischen Filter und/oder einen Demultiplexer umfasst, der die erste Übertragungsfunktion (184, 186) aufweist.

11. Optisches System (10) nach Anspruch 10, wobei der Filter ein Fabry-Perot-Interferometer umfasst.

12. Optisches System (10) nach einem der Ansprüche 9 bis 11, das Folgendes umfasst:
einen dritten Übertragungsweg (52) zwischen einem zweiten Ausgangsanschluss der zweiten Vorrichtung (18) und einer vierten Vorrichtung (30),
wobei die zweite Vorrichtung (18) ein zweites Signal (V2) im zweiten Frequenzbereich (sf4) und das vierte Signal (D2) im vierten Frequenzbereich (sf3) an die vierte Vorrichtung (30) überträgt,
wobei die vierte Vorrichtung (30) eine zweite Übertragungsfunktion (184a, 186a) aufweist, die die Übertragung des zweiten Signals (V2) zulässt und die Übertragung des vierten Signals (D2) sperrt, und die zweite Übertragungsfunktion (184a, 186a) derart ist, dass die vierte Vorrichtung (30) die Übertragung von Signalen im ersten Frequenzbereich (sf2) zulässt und die Übertragung von Signalen im dritten Frequenzbereich (sf1) sperrt.

13. Optisches System (10) nach Anspruch 12, wobei die erste Übertragungsfunktion (184, 186) dieselbe wie die zweite Übertragungsfunktion (184a, 186a) ist.

14. Optisches System (10) nach einem der Ansprüche 9 bis 13, das nicht dafür geeignet ist, das zweite Signal (V2) und das vierte Signal (D2) von der zweiten Vorrichtung (28) an die dritte Vorrichtung (24) zu übertragen.

15. Optisches System (10) nach einem der Ansprüche 9 bis 14, das Vorrichtungen, um ein Verfahren nach einem der Ansprüche 1 bis 8 durchzuführen, umfasst.

## Revendications

1. Procédé de transmission de signaux dans un réseau optique, comprenant :
la transmission, par une première voie de transmission (46), d'un premier signal (V1) dans une première bande de fréquences (sf2) et d'un deuxième signal (V2) dans une deuxième bande de fréquences (sf4),
la première bande de fréquences (sf2) étant différente de la deuxième bande de fréquences (sf4),
le premier signal (V1) contenant le même contenu que le deuxième signal (V2),
la séparation (18) du premier signal (V1) du deuxième signal (V2),
la transmission du premier signal (V1) séparé par une deuxième voie de transmission (48),
après la transmission par la deuxième voie de transmission (48), le premier signal (V1) étant filtré au moyen d'un premier dispositif (104) qui a une première fonction de transfert (184, 186) qui transmet le premier signal (V1),
dans lequel la première fonction de transfert (184, 186) est telle que le premier dispositif (104) permet la transmission de signaux dans la deuxième bande de fréquences (sf4b) et bloque la transmission de signaux dans au moins une bande de fréquences (sf3b) qui est différente de ou se situe entre la première bande de fréquences (sf2b) et la deuxième bande de fréquences (sf4b).

2. Procédé selon la revendication 1, dans lequel le premier signal (V1) est un signal vidéo analogique.

3. Procédé selon une des revendications précédentes,
dans lequel un troisième signal (D1) est transmis dans une troisième bande de fréquences (sf1) et un quatrième signal (D2) est transmis dans une quatrième bande de fréquences (sf3) par la première voie de transmission (46),
dans lequel le troisième signal (D1) est différent du quatrième signal (D2),
dans lequel le troisième signal (D1) est séparé (18) conjointement avec le premier signal (V1) du deuxième signal (V2) et du quatrième signal (D2),
le premier signal (V1) et le troisième signal (D1) sont transmis ensemble par la deuxième voie de transmission (48),
la première fonction de transfert (184, 186) est telle que le troisième signal (D1) est bloqué,
dans lequel la première fonction de transfert (184, 186) est telle que le premier dispositif (104) bloque la transmission de signaux dans la quatrième bande de fréquences (sf3b) et permet la transmission de signaux dans la deuxième bande de fréquences (sf4b).

4. Procédé selon la revendication 3, dans lequel le deuxième signal (V2) séparé est transmis par une troisième voie de transmission (52), après la transmission par la troisième voie de transmission (52), le deuxième signal (V2) est filtré dans un deuxième dispositif (30) qui a une deuxième fonction de transfert (184a, 186a) qui transmet le deuxième signal (V2),
dans lequel la deuxième fonction de transfert (184a, 186a) est telle que le deuxième dispositif (30) permet la transmission de signaux dans la première bande de fréquences (sf2) et bloque la transmission de signaux dans au moins une bande de fréquences (sf3) qui est différente de ou entre la première bande de fréquences (sf2) et la deuxième bande de fréquences (sf4).

5. Procédé selon la revendication 4,
dans lequel la deuxième fonction de transfert (184a, 186a) est telle que le deuxième dispositif (30) bloque la transmission du quatrième signal (D2), et
dans lequel la deuxième fonction de transfert (184a, 186a) est telle que le deuxième dispositif (30) bloque la transmission de signaux dans la troisième bande de fréquences (sf1) et permet la transmission de signaux dans la première bande de fréquences (sf2).

6. Procédé selon la revendication 4 ou 5, dans lequel la première fonction de transfert (184, 186) est la même que la deuxième fonction de transfert (184a, 186a).

7. Procédé selon une des revendications précédentes, dans lequel la première fonction de transfert (184, 186) est une fonction de transfert périodique.

8. Procédé selon une des revendications précédentes, dans lequel la première voie de transmission (46) fait partie d'un réseau optique passif (10).

9. Système optique (10) pour la transmission de signaux optiques, comprenant :
une première voie de transmission (46), adaptée pour transmettre un premier signal (V1) dans une première bande de fréquences (sf2) et un deuxième signal (V2) dans une deuxième bande de fréquences (sf4),
la première bande de fréquences (sf2) étant différente de la deuxième bande de fréquences (sf4),
le premier signal (V1) étant le même que le deuxième signal (V2),
le système optique comprenant également :
un serveur vidéo analogique (14) adapté pour délivrer le premier signal (V1) et le deuxième signal (V2)
la première voie de transmission (46) entre un premier dispositif (16) et un deuxième dispositif (18),
une deuxième voie de transmission (48, 54) entre un premier port de sortie du deuxième dispositif (18) et un troisième dispositif (24),
le premier dispositif (16) étant adapté pour transmettre un premier signal (V1) dans une première bande de fréquences (sf2), un deuxième signal (V2) dans une deuxième bande de fréquences (sf4), un troisième signal (D1) dans une troisième bande de fréquences (sf1) et un quatrième signal (D2) dans une quatrième bande de fréquences (sf3),
le deuxième dispositif (18) étant adapté pour transmettre le premier signal (V1) dans la première bande de fréquences (sf2) et le troisième signal (D1) dans la troisième bande de fréquences (sf1) au troisième dispositif (24),
le troisième dispositif (24) ayant une première fonction de transfert (184, 186) permettant la transmission du premier signal (V1) et bloquant la transmission du troisième signal (D1),
la première fonction de transfert (184, 186) étant telle que le troisième dispositif (24) permet la transmission de signaux dans la deuxième bande de fréquences (sf4) et bloque la transmission de signaux dans la quatrième bande de fréquences (sf3).

10. Système optique (10) selon la revendication 9, dans lequel le troisième dispositif (24) comprend un filtre optique et/ou un démultiplexeur qui a la première fonction de transfert (184, 186).

11. Système optique (10) selon la revendication 10, dans lequel le filtre comprend un interféromètre de Fabry-Pérot.

12. Système optique (10) selon une des revendications 9 à 11, comprenant :
une troisième voie de transmission (52) entre un deuxième port de sortie du deuxième dispositif (18) et un quatrième dispositif (30),
le deuxième dispositif (18) transmettant un deuxième signal (V2) dans la deuxième bande de fréquences (sf4) et le quatrième signal (D2) dans la quatrième bande de fréquences (sf3) au quatrième dispositif (30),
le quatrième dispositif (30) ayant une deuxième fonction de transfert (184a, 186a) permettant la transmission du deuxième signal (V2) et bloquant la transmission du quatrième signal (D2),
et la deuxième fonction de transfert (184a, 186a) étant telle que le quatrième dispositif (30) permet la transmission de signaux dans la première bande de fréquences (sf2) et bloque la transmission de signaux dans la troisième bande de fréquences (sf1).

13. Système optique (10) selon la revendication 12, dans lequel la première fonction de transfert (184, 186) est la même que la deuxième fonction de transfert (184a, 186a).

14. Système optique (10) selon une des revendications 9 à 13, étant inapproprié pour transmettre le deuxième signal (V2) et le quatrième signal (D2) du deuxième dispositif (28) au troisième dispositif (24).

15. Système optique (10) selon une des revendications 9 à 14, comprenant des dispositifs pour effectuer un procédé selon une des revendications 1 à 8.
